# EUROPEAN PATENT APPLICATION

(11) **EP 3 045 791 A1**
(43) Date of publication of application: **20.07.2016**
(21) Application number: 16151766.9
(22) Date of filing: 18.01.2016
(51) Int. Cl.: F16K 31/163, F16K 1/22

(54) **VIBRATION TOLERANT BUTTERFLY VALVE**

(30) Priority: 19.01.2015 US 201514599898
(71) Applicant: Hamilton Sundstrand Corporation, Windsor Locks, CT 06096-1010 (US)
(72) Inventor: KAMP, Joshua, Glastonbury, CT Connecticut 06033 (US); MCAULIFFE, Christopher, Windsor, CT Connecticut 06095 (US)
(74) Representative: Iceton, Greg James

(57) **Abstract**

A valve 10 includes a valve housing 12, a shaft 26, a flow control member 14, and an actuator assembly 16. The valve housing 12 includes walls defining at least an actuator chamber 24 above a main fluid passage 20, with a valve centerline parallel to a longitudinal axis of the main fluid passage 20. The flow control member 14 is mounted to a first longitudinal end of the shaft 26, and is rotatable in the main fluid passage 20 via rotation of the shaft 26. The actuator assembly 16, disposed in the actuator chamber 24, is adapted to rotate a second end of the shaft 26 to effect rotation of the flow control member 14. The actuator assembly 16 includes at least one actuator unit 36 arranged in the actuator chamber 24 such that an actuator centerline is disposed transverse to the valve centerline.

## Description

### BACKGROUND

The present disclosure relates generally to fluid control valves and more specifically to fluid control valves suitable for high vibration environments.

Butterfly valves are widely used due to their high degree of accuracy, precision, and responsiveness. As is known, one or more actuators drive rotation of a shaft which in turn controls the position of a disc in the main passage. Conventional pneumatic actuators for butterfly valves have a piston defining a supply chamber and a servo chamber, while an intermediate chamber is vented to ambient. Such arrangements usually include a linear actuator with the shaft, crank, and linkage included in the supply side chamber, and the actuator is typically arranged with the actuator centerline in line with a center line of the main passage.

In such arrangements, this results in the centerline of the actuator being in plane with the centerline of the main passage. To achieve the torque necessary to operate the disc, the actuator must be cantilevered off the valve assembly. However, this creates problems in high vibration environments. Repeated vibrations are absorbed by the cantilevered actuator components and linkages, greatly shortening the useful life of an otherwise reliable and accurate valve.

### SUMMARY

One example embodiment of a valve includes a valve housing, a shaft, a flow control member, and an actuator assembly. The valve housing includes one or more first walls defining at least a main fluid passage with a valve centerline parallel to a longitudinal axis of the main fluid passage. Second walls define an actuator chamber above the main fluid passage, and a shaft passage connects the actuator chamber and the main fluid passage. The flow control member is mounted to a first longitudinal end of the shaft extending into the main fluid passage. The flow control member is rotatable in the main fluid passage via rotation of the shaft. The actuator assembly is disposed in the actuator chamber, and is adapted to rotate a second end of the shaft to effect rotation of the flow control member in the main fluid passage. The actuator assembly includes at least one actuator unit arranged in the actuator chamber such that an actuator centerline is disposed transverse to the valve centerline.

An example embodiment of a flow control mechanism for a butterfly valve includes a shaft, a butterfly disc mounted to a first longitudinal end of the shaft, and an actuator assembly mounted to a second longitudinal end of the shaft. The butterfly disc is rotatable via rotation of the shaft, and the actuator assembly is adapted to rotate the second end of the shaft to effect rotation of the butterfly disc. The actuator assembly includes at least one piston arranged such that an actuator centerline is disposed parallel to a face of the butterfly disc when the butterfly disc is in a closed position.

### BRIEF DESCRIPTION OF THE DRAWINGS

FIG. 1 is a perspective view of one exemplary embodiment of a butterfly valve.
FIG. 2 is a cutaway, top-facing view of the butterfly valve shown in FIG. 1.
FIG. 3 is a cutaway, side-facing view of the butterfly valve shown in FIG. 1.
FIG. 4 shows a flow control mechanism for the butterfly valve with the housing omitted.

### DETAILED DESCRIPTION

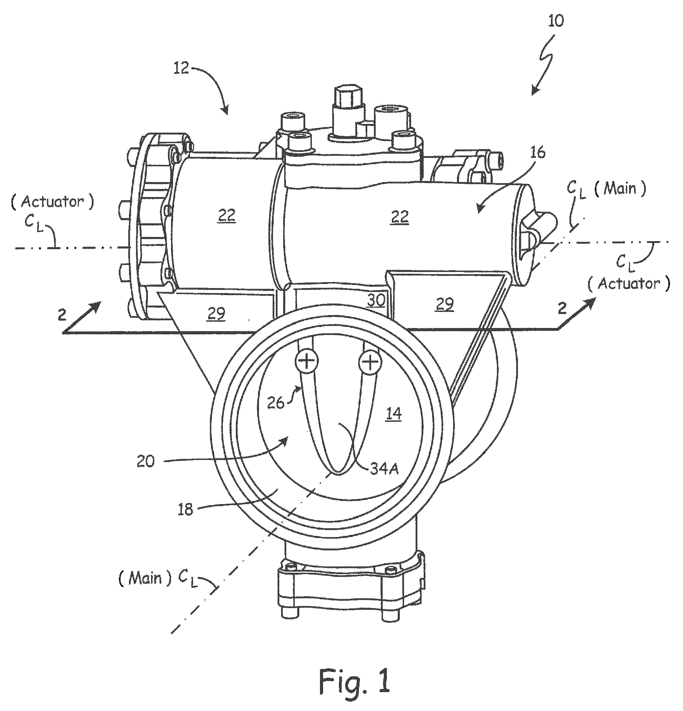

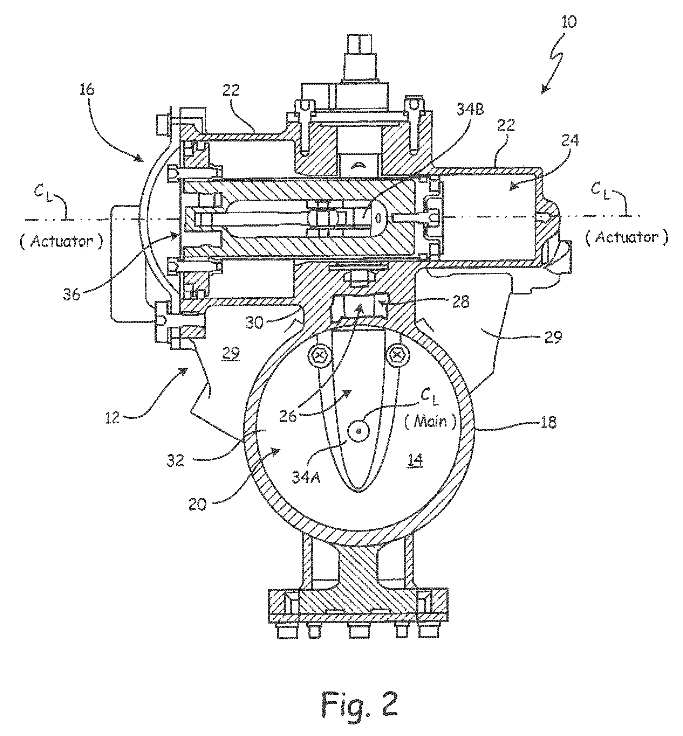

FIG. 1 is a perspective view of valve 10, and FIG. 2 is a sectional view taken through line 2-2 of FIG. 1. Valve 10 generally includes valve housing 12, flow control member 14, and actuator assembly 16. Valve housing 12 can include several walls to define various passages for the operable elements of valve 10. In this non-limiting illustrative example, housing 12 includes at least one first wall 18 defining a valve main body with main fluid passage 20, as well as one or more second walls 22 defining actuator chamber 24 (best seen in FIG. 2).

Shaft 26 extends through shaft passage 28, which in this instance can be formed through at least one housing wall (e.g., wall 30). As best illustrated in FIG. 2, shaft 26 can be inserted through an opening in wall 30, which separates main fluid passage 20 and actuator chamber 24. Opening 28 defines a portion of shaft passage 26, and can be in communication with one or more portions of actuator chamber 24. Depending on the particular construction of valve 10, wall 30 can include one or both of a first wall 18 and a second wall 22. Wall 30 may also be a common wall defining a portion of both main fluid passage 20 and actuator chamber 24.

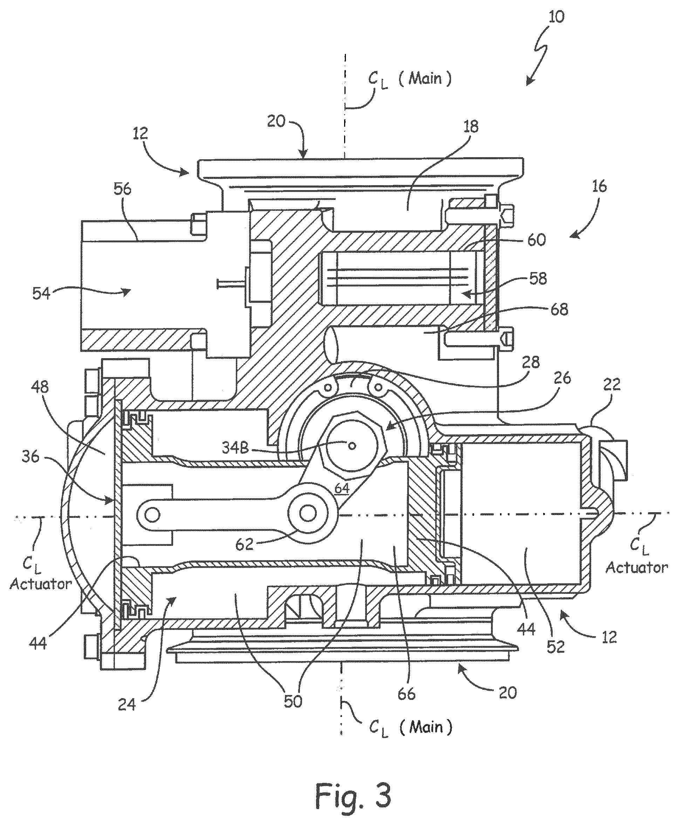

Actuator assembly 16 can include one or more actuator units (best seen in FIG. 3) disposed in actuator chamber 24, so that both are disposed transverse to valve centerline C_{L}(main). Valve centerline C_{L}(main) is defined parallel to a longitudinal axis of main passage 20. In FIGS. 1-2, support brackets 29 connect at least one first wall 18 to at least one of the plurality of second walls 22. These support brackets 29, which may be integral to housing 12, support actuator chamber 24 and actuator assembly 18 above main fluid passage 20. As seen in FIG. 2 (and in more detail in FIG. 3), as part of actuator assembly 16, one or more actuator units 36 can be disposed in actuator chamber 24 atop main fluid passage 20.

Flow control member 14 can be adapted to rotate in main fluid passage 20 via rotation of shaft 26. Though shown in a closed position, rotational position of flow control member 14 results in an opening for fluid to pass through main fluid passage 20. In the illustrative example of a butterfly valve, rotational position of flow control member / butterfly disc 14 defines the size of a fluid opening about perimeter 32 of flow control member 14. The rotational position and speed of flow control member 14 (via shaft 26) can be calibrated in conjunction with actuator assembly 16 to control an effective size of the opening adjacent perimeter 32.

Flow control member 14 (e.g., a butterfly disc) can be mounted to a first longitudinal end 34A of shaft 14, and which extends into main fluid passage 24, while second longitudinal end 34B of shaft 14 is connected to actuator assembly 16. To drive rotation of shaft 26 (and flow control member 14), actuator assembly 16 can include at least one actuator unit 36 adapted to effect rotation of flow control member 14 via shaft second longitudinal end 34B. In this way, rotation of flow control member 14 can control fluid flow through main fluid passage 20.

Both actuator chamber 24 and actuator unit(s) 36 are supported transversely above main fluid passage 20 such that actuator centerline C_{L}(actuator) is transverse or perpendicular to valve centerline C_{L}(main), which is defined along a longitudinal axis of main fluid passage 20. In conventional arrangements, the actuator centerline is only perpendicular to the shaft, but is generally parallel or at least coplanar with the valve centerline. Because the shaft and disc are canted relative to the flow passage, to achieve the torque required to rotate disc, such conventional arrangements result in a cantilevered actuator which does not withstand use in high vibration environments such as in certain gas turbine applications.

Eliminating the need to cantilever the actuator enables long-term reliable operation of the butterfly valve in high vibration environments. In certain embodiments, to facilitate transverse positioning of actuator assembly 16, (e.g., the centerline of the actuator and/or piston) relative to the valve centerline, one or more of the shaft, crank and linkage can be placed in the intermediate portion of actuator chamber 24. This example embodiment is best shown in FIG. 3.

FIG. 3 shows one non-limiting illustrative embodiment of an arrangement of an actuator assembly 16 suitable for use in a butterfly valve. As noted above, actuator unit(s) 36 are supported in a corresponding actuator chamber 24 and are arranged transversely above main fluid passage 20 such that actuator centerline C_{L} (actuator) is transverse or perpendicular to valve centerline C_{L}(main).

In certain embodiments, actuator unit 36 can be a linear actuator with at least one piston unit 44. Here, actuator chamber 24 is divided into servo portion 48, intermediate portion 50, and supply portion 52, each of which retain a corresponding portion of piston unit 44. As part of actuator unit 36, piston unit 44 can be driven in either direction by torque motor 54, which is in communication with servo portion 48 of actuator chamber 24. Torque motor 54 can in turn be disposed parallel and immediately adjacent to actuator unit 36, supported at motor portion or motor mount 56 of actuator chamber 24. Motor mount 56 can additionally or alternatively be provided in a separate motor chamber. Optionally, filter 58 can be provided in filter chamber 60 to ensure particulates or contaminants do not reach actuator chamber 24. Filter 58 can be packaged tightly with other actuator components, close to the valve center of gravity.

In certain embodiments, actuator unit 36 also includes linkage 62 and crank 64 connecting actuator unit 36 (e.g., piston unit 44) to shaft second end 34B. Linkage 62 and crank 64 can be adapted to translate motion of the actuator unit. As seen in FIG. 3, one or more of shaft second end 34B, linkage 62, and crank 64 can be disposed in intermediate portion 50 of actuator chamber 24. This generally centers actuator assembly 18 in actuator chamber 24 over the center of valve 10. Weight can be more easily balanced which reduces load requirements to move the valve flow control member, particularly in a transverse orientation. To further facilitate operation of valve 10, at least one of the plurality of second walls 22 defining actuator chamber 24 includes at least one vent 68 for equalizing pressure in intermediate portion 50, which is also in communication with shaft passage 28. Intermediate portion 50 can be vented to ambient, downstream pressure, or another suitable region.

Generally, these non-limiting example embodiments allow for an actuator to be supported transversely relative to a main portion of the valve housing, including the main fluid passage. This makes the valve more tolerant to surrounding vibration without unduly affecting performance, responsiveness, or power requirements for operating the valve.

To further support vibration tolerance, one or more elements of actuator assembly 16 can be packaged together and arranged as close as possible to the valve's center of gravity as is practicable. Here, this is achieved in large part by the transverse arrangement of actuator unit 36 (and actuator chamber 24) as close as possible over a center of the valve main body (e.g., walls 18 defining main fluid passage 20). Linkage 62 and crank 64 being disposed in intermediate portion 50 of actuator chamber 24 also helps to provide a degree of balance to actuator assembly 16, especially as compared to traditional cantilevered designs where the shaft, crank, and linkage are included in the supply side chamber, and/or where the actuator is arranged with the actuator centerline in line with a center line of the main passage. It should also be noted that torque motor 54 can be packaged with motor mount 56 at or near the center of gravity of actuator assembly 16, as well as filter 58 and filter chamber 60 also being packaged into actuator assembly 16 in a compact manner. One or more of these aspects can improve stiffness and raise the natural frequency of the valve.

This in turn, provides improved vibration tolerance as compared to conventional valves, most importantly at key (e.g., expensive or sensitive) elements of actuator assembly 16 such as actuator unit 36 and torque motor 54. Increased stiffness can also reduce the raw material requirements to meet fatigue life needs of the valve body and the actuator, lightening the overall valve.

Further stiffness, and thus vibration resistance, can be provided by support brackets or ribs 29 so that when actuator unit 36 is offset to one side of chamber 24 (i.e., corresponding to being at or near a fully opened or fully closed position), any weight imbalance resulting from vibration can readily be tolerated without substantial wear on valve components such as linkage 62, crank 64, and/or bearings, piston rings, and the like (omitted for clarity).

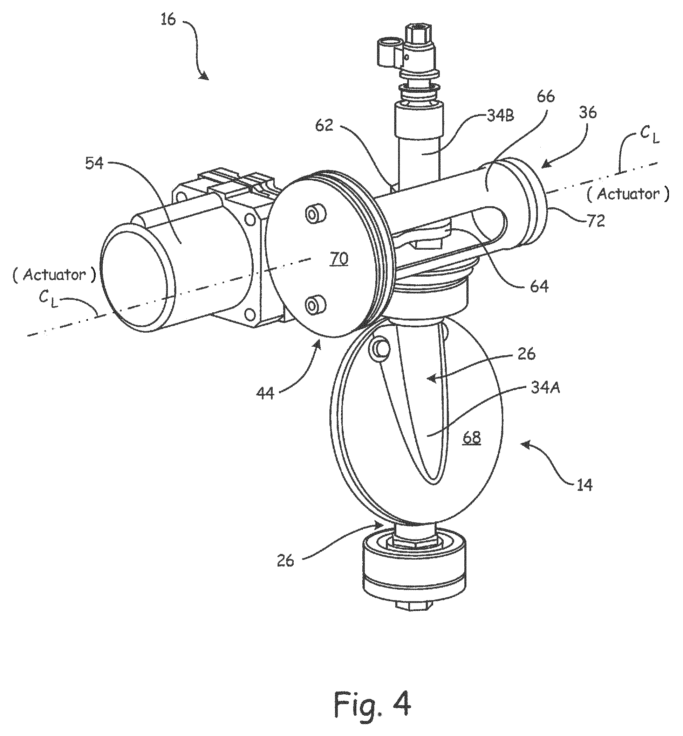

FIG. 4 shows a side view of a valve mechanism including interconnection of flow control member 14 and actuator assembly 16 via shaft 26. Valve housing 12 (shown in FIGS. 1-3) is omitted for clarity. In a fully assembled valve, actuator unit 36, mounted to shaft second end 34B, would be supported by one or more walls of a valve housing (e.g. actuator chamber 24 shown in FIGS. 2 and 3). But as seen in FIG. 4, the valve mechanism includes actuator unit 36 with piston 44 arranged above flow control member 14. Here, piston 44 is arranged such that actuator centerline C_{L}(actuator) is parallel to disc face 68 of flow control member 14 when in a closed position. It will be appreciated that actuator centerline C_{L}(actuator) is also parallel to an opposing face (not visible in FIG. 4) in the closed position. This corresponds to actuator centerline C_{L}(actuator) being transverse or perpendicular to valve centerline C_{L}(main) in a fully assembled valve (shown in FIGS. 1-3). To illustrate this relative orientation, flow control member / butterfly disc 14 is shown as it would be configured with the valve in a closed position.

However, it will be appreciated that member / disc 14 can be rotated clockwise and/or counterclockwise via rotation of shaft 26, with rotation effected by linear motion of piston 44. Rotation of disc 14 can also be effected with assistance from torque motor 54. Piston 44 can be driven pneumatically in either linear direction by changing the relative forces applied against servo piston 70 and supply piston 72. Here, linear motion of piston 44 (with piston arm 66) is translated into rotational motion of shaft 26 and flow control member / butterfly disc 14 by way of shaft first end 34A via linkage 62 and crank 64. Linkage 62 and crank 64 connect shaft second end 34B to piston 44 approximately midway between servo face 70 and supply face 72. In an assembled valve, this corresponds to the intermediate portion of the actuator chamber.

### Discussion of Possible Embodiments

The following are non-exclusive descriptions of possible embodiments of the present disclosure.

One example embodiment of a valve includes a valve housing, a shaft, a flow control member, and an actuator assembly. The valve housing includes one or more first walls defining at least a main fluid passage with a valve centerline parallel to a longitudinal axis of the main fluid passage. Second walls define an actuator chamber above the main fluid passage, and a shaft passage connects the actuator chamber and the main fluid passage. The flow control member is mounted to a first longitudinal end of the shaft extending into the main fluid passage. The flow control member is rotatable in the main fluid passage via rotation of the shaft. The actuator assembly is disposed in the actuator chamber, and is adapted to rotate a second end of the shaft to effect rotation of the flow control member in the main fluid passage. The actuator assembly includes at least one actuator unit arranged in the actuator chamber such that an actuator centerline is disposed transverse to the valve centerline.

The valve of the preceding paragraph can optionally include, additionally and/or alternatively, any one or more of the following features, configurations and/or additional components:

A valve according to an exemplary embodiment of this disclosure, among other possible things includes a valve housing including one or more first walls defining at least a main fluid passage with a valve centerline parallel to a longitudinal axis of the main fluid passage, and one or more second walls defining an actuator chamber above the main fluid passage; a shaft extending along a shaft passage connecting the actuator chamber and the main fluid passage; a flow control member mounted to a first longitudinal end of the shaft extending into the main fluid passage, the flow control member rotatable in the main fluid passage; and an actuator assembly disposed in the actuator chamber, the actuator assembly adapted to rotate a second end of the shaft to effect rotation of the flow control member in the main fluid passage, the actuator assembly including at least one actuator unit arranged in the actuator chamber such that an actuator centerline is disposed transverse to the valve centerline.

A further embodiment of the foregoing valve, wherein the actuator chamber includes a servo portion, an intermediate portion, and a supply portion.

A further embodiment of any of the foregoing valves, wherein the actuator unit includes a linear actuator with piston disposed in the actuator chamber, the piston drivable along the actuator centerline so that linear motion of the piston is along the actuator centerline transverse to the valve centerline.

A further embodiment of any of the foregoing valves, wherein the actuator unit includes a torque motor in communication with the servo portion of the actuator chamber, the torque motor attached to a mount disposed in a motor chamber.

A further embodiment of any of the foregoing valves, wherein the torque motor and the actuator chamber are arranged substantially parallel to the actuator centerline above the valve centerline.

A further embodiment of any of the foregoing valves, wherein the actuator assembly includes a linkage connecting the actuator unit to the second end of the shaft, the linkage adapted to translate linear motion of the piston arm along the actuator centerline into rotational motion of the shaft and the flow control member.

A further embodiment of any of the foregoing valves, wherein at least one of the crank, the second end of the shaft, and the linkage are disposed in the intermediate portion of the actuator chamber.

A further embodiment of any of the foregoing valves, wherein at least one of the second plurality of walls defining the actuator chamber includes at least one vent.

A further embodiment of any of the foregoing valves, wherein the actuator assembly and the actuator chamber have a combined center of gravity directly above the flow control element and substantially proximate to the shaft.

A further embodiment of any of the foregoing valves, wherein the valve further comprises a support bracket connecting at least one first wall to at least one second wall for supporting the actuator chamber and actuator unit transverse to the valve centerline and the longitudinal axis of the main fluid passage.

A further embodiment of any of the foregoing valves, wherein the support bracket is integral to the housing.

An example embodiment of a flow control mechanism for a butterfly valve includes a shaft, a butterfly disc mounted to a first longitudinal end of the shaft, and an actuator assembly mounted to a second longitudinal end of the shaft. The butterfly disc is rotatable via rotation of the shaft, and the actuator assembly is adapted to rotate the second end of the shaft to effect rotation of the butterfly disc. The actuator assembly includes at least one piston arranged such that an actuator centerline is disposed parallel to a face of the butterfly disc when the butterfly disc is in a closed position.

The mechanism of the preceding paragraph can optionally include, additionally and/or alternatively, any one or more of the following features, configurations and/or additional components:

A mechanism according to an exemplary embodiment of this disclosure, among other possible things includes a shaft including a first longitudinal end and a second longitudinal end; a butterfly disc mounted to a first longitudinal end of the shaft, the butterfly disc rotatable via rotation of the shaft; and an actuator assembly mounted to a second longitudinal end of the shaft, the actuator assembly adapted to rotate the second end of the shaft to effect rotation of the butterfly disc, the actuator assembly including at least one piston arranged such that an actuator centerline is disposed parallel to a face of the butterfly disc when the butterfly disc is in a closed position.

A further embodiment of the foregoing mechanism, wherein the actuator assembly also includes a torque motor.

A further embodiment of any of the foregoing mechanisms, further comprising a crank connecting the piston to the second longitudinal end of the shaft.

A further embodiment of any of the foregoing mechanisms wherein the crank and the second longitudinal end of the shaft are connected to a piston rod generally midway between a servo piston and a supply piston.

While the invention has been described with reference to an exemplary embodiment(s), it will be understood by those skilled in the art that various changes may be made without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A valve (10) comprising:
a valve housing (12) including one or more first walls defining at least a main fluid passage with a valve centerline parallel to a longitudinal axis of the main fluid passage (20), and one or more second walls defining an actuator chamber (24) above the main fluid passage;
a shaft (26) extending along a shaft passage connecting the actuator chamber (24) and the main fluid passage (20);
a flow control member (14) mounted to a first longitudinal end of the shaft (26) extending into the main fluid passage (20), the flow control member (14) rotatable in the main fluid passage (20); and
an actuator assembly (16) disposed in the actuator chamber, the actuator assembly adapted to rotate a second end of the shaft (26) to effect rotation of the flow control member (14) in the main fluid passage (20), the actuator assembly (16) including at least one actuator unit (36) arranged in the actuator chamber (24) such that an actuator centerline is disposed transverse to the valve centerline.

2. The valve of claim 1, wherein the actuator chamber (24) includes a servo portion, an intermediate portion, and a supply portion.

3. The valve of claim 2, wherein the actuator unit (36) includes a linear actuator with a piston (44) disposed in the actuator chamber (24), the piston (44) drivable along the actuator centerline so that linear motion of the piston (44) is along the actuator centerline transverse to the valve centerline.

4. The valve of claim 3, wherein the actuator unit (36) includes a torque motor (54) in communication with the servo portion of the actuator chamber (24), the torque motor (54) attached to a mount disposed in a motor chamber.

5. The valve of claim 4, wherein the torque motor (54) and the actuator chamber are arranged substantially parallel to the actuator centerline above the valve centerline.

6. The valve of claim 3, wherein the actuator assembly (16) includes a crank (64) and a linkage (62) connecting the actuator unit (36) to the second end of the shaft (26), the linkage adapted to translate linear motion of the piston arm along the actuator centerline into rotational motion of the shaft and the flow control member.

7. The valve of claim 6, wherein at least one of the crank (64), the second end of the shaft (26), and the linkage (62) are disposed in the intermediate portion of the actuator chamber (24).

8. The valve of claim 7, wherein at least one of the second plurality of walls defining the actuator chamber (24) includes at least one vent (68).

9. The valve of any preceding claim, wherein the actuator assembly (16) and the actuator chamber (24) have a combined center of gravity directly above the flow control element and substantially proximate to the shaft (26).

10. The valve of any preceding claim, further comprising:
a support bracket (29) connecting at least one first wall to at least one second wall for supporting the actuator chamber (24) and actuator unit (36) transverse to the valve centerline and the longitudinal axis of the main fluid passage.

11. The valve of claim 10, wherein the support bracket (29) is integral to the housing.

12. A flow control mechanism for a butterfly valve, the mechanism comprising:
a shaft (26) including a first longitudinal end and a second longitudinal end;
a butterfly disc (14) mounted to a first longitudinal end of the shaft, the butterfly disc (14) rotatable via rotation of the shaft (26); and
an actuator assembly (16) mounted to a second longitudinal end of the shaft (26), the actuator assembly (16) adapted to rotate the second end of the shaft (26) to effect rotation of the butterfly disc (14), the actuator assembly (16) including at least one piston (44) arranged such that an actuator centerline is disposed parallel to a face of the butterfly disc (14) when the butterfly disc (14) is in a closed position.

13. The mechanism of claim 12, wherein the actuator assembly (16) also includes a torque motor.

14. The mechanism of claims 12 or 13, further comprising a crank (64) connecting the piston (44) to the second longitudinal end of the shaft (26).

15. The mechanism of claim 14, wherein the crank (64) and the second longitudinal end of the shaft (26) are connected to a piston rod generally midway between a servo piston and a supply piston.
